(19) Europäisches Patentamt
European Patent Office
Office européen des brevets

(11) **EP 3 899 569 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **19782573.0**

(22) Anmeldetag: **01.10.2019**

(51) Internationale Patentklassifikation (IPC):
**G01S 13/931** (2020.01)      **G01S 13/72** (2006.01)
**G01S 7/35** (2006.01)

(52) Gemeinsame Patentklassifikation (CPC):
**G01S 13/931; G01S 7/354; G01S 13/726**

(86) Internationale Anmeldenummer:
**PCT/EP2019/076565**

(87) Internationale Veröffentlichungsnummer:
**WO 2020/126142 (25.06.2020 Gazette 2020/26)**

(54) **AUSWERTEN VON ORTUNGSMESSUNGEN EINES UMFELDSENSORS FÜR EIN KRAFTFAHRZEUG**

EVALUATING POSITION-FINDING MEASUREMENTS OF AN ENVIRONMENTAL SENSOR FOR A MOTOR VEHICLE

ÉVALUATION DE MESURES DE LOCALISATION D'UN DÉTECTEUR ENVIRONNEMENTAL POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **20.12.2018  DE 102018222686**

(43) Veröffentlichungstag der Anmeldung:
**27.10.2021  Patentblatt 2021/43**

(73) Patentinhaber: **Robert Bosch GmbH**
**70442 Stuttgart (DE)**

(72) Erfinder:
• **GUSSNER, Thomas**
**71634 Ludwigsburg (DE)**
• **LANG, Stefan**
**71726 Benningen (DE)**

(56) Entgegenhaltungen:
WO-A1-2018/085107       DE-A1- 102006 019 474
DE-A1- 102011 017 323     US-A1- 2014 072 233

• SIMON J. JULIER ET AL: "New extension of the Kalman filter to nonlinear systems", SPIE PROCEEDINGS, vol. 3068, 28 July 1997 (1997-07-28), US, pages 182, XP055608764, ISBN: 978-1-5106-3673-6, DOI: 10.1117/12.280797
• JULIER S J ET AL: "Reduced sigma point filters for the propagation of means and covariances through nonlinear transformations", PROCEEDINGS OF THE 2002 AMERICAN CONTROL CONFERENCE. ACC. ANCHORAGE, AL, MAY 8 - 10, 2002; [AMERICAN CONTROL CONFERENCE], NEW YORK, NY : IEEE, US, vol. 2, 8 May 2002 (2002-05-08), pages 887 - 892, XP010596484, ISBN: 978-0-7803-7298-6, DOI: 10.1109/ACC.2002.1023128

## Beschreibung

Die Erfindung betrifft ein Verfahren zum Auswerten von Ortungsmessungen eines Umfeldsensors für ein Kraftfahrzeug, bei dem Ortungsmessungen und zugehörige Messunsicherheiten der Ortungsmessungen von dem Umfeldsensor erhalten werden.

In Fahrerassistenzsystemen für Kraftfahrzeuge, beispielsweise in Systemen zur automatischen Abstandsregelung oder in Kollisionswarnsystemen, werden häufig Radarsensoren zur Erfassung des Verkehrsumfelds eingesetzt.

In letzter Zeit besteht zunehmendes Interesse an Radarsensoren mit immer höherer Winkelauflösung und Winkeltrennfähigkeit, die bei einem ausgedehnten Objekt je nach Größe und Abstand sehr viele Radarreflexe detektieren können.

Roos et al., "Reliable Orientation Estimation of Vehicles in High-Resolution Radar Images", IEEE Transactions on Microwave Theory and Techniques 64.9 (2016), 2986-2993, beschreibt einen Clusteralgorithmus, der bei der Zuordnung von Radarmessungen zu einem Objekt unabhängig von bereits existierendem Wissen über das Objekt arbeitet. Dies kann jedoch zu Sprüngen in den Objektparametern, wie Orientierung oder Ausdehnung, führen.

Eine Zuordnung jeder einzelnen, zu einem Objekt assoziierten Messung zu einem entsprechenden Punkt eines detaillierten Objektmodells würde hingegen ein hohes Modellwissen bezüglich Objektart und Objektausdehnung voraussetzen, was jedoch nicht immer zuverlässig vorliegt.

DE 102006019474 A1 beschreibt ein elektrisches System mit einem Hauptsystem, das einen als Wahrscheinlichkeitsfilter ausgebildeten Hauptfilter hat, mehreren mit dem Hauptsystem verbundenen Teilsystemen, die jeweils wenigstens eine Datenquelle umfassen, wobei dem Hauptsystem Daten von den Teilsystemen zuführbar sind, wobei die Teilsysteme jeweils einen als Wahrscheinlichkeitsfilter ausgebildeten Subfilter haben, wobei den Teilsystemen Daten von dem Hauptsystem zuführbar sind. In einem Beispiel umfasst ein erstes der Teilsysteme) ein Relativsensorarray als Datenquelle, ein zweites der Teilsysteme umfasst mehrere Transponder als Datenquellen, und der Hauptfilter und die Subfilter umfassen Unscented-Partikel-Filter.

DE 10 2011 017 323 A1 beschreibt ein Verfahren zur fahrzeuginternen Ermittlung einer Kollisionswahrscheinlichkeit eines Fahrzeugs mit einem Objekt, bei dem ausgehend von einem auf Messwerten basierenden Zustandsvektor, der den momentanen Positions- und Bewegungszustand des Fahrzeugs und eines erfassten Objekts beschreibt, ein innerhalb einer Vorausschauzeit erwarteter minimaler Objektabstand zwischen dem Fahrzeug und dem erfassten Objekt sowie die statistische Verteilung der Werte des minimalen Objektabstands vorausschauend ermittelt werden.

US 2014/0072233 A1 betrifft das Aktualisieren eines vorausgesagten Ortes eines Objektes in einem mehrdimensionalen Raum.

WO 2018/085107 A1 beschreibt ein Verfahren zur Abstandsmessung für das Bilden eines Fahrzeugkonvois. Es wird das Identifizieren der Rückseite eines bestimmten Fahrzeugs und das Verfolgen (Tracking) der Rückseite des Fahrzeugs beschrieben.

Aufgabe der Erfindung ist es, ein Verfahren zum Auswerten von Ortungsmessungen eines Umfeldsensors für ein Kraftfahrzeug anzugeben, das es erlaubt, eine Zustandsschätzung eines Objekts in effizienter Weise zu verbessern.

Diese Aufgabe wird erfindungsgemäß mit den in den unabhängigen Ansprüchen angegebenen Merkmalen gelöst. Vorteilhafte Weiterbildungen und Ausgestaltungen der Erfindung sind in den Unteransprüchen angegeben. Der Umfeldsensor ist ein Radarsensor.

Das Schätzen von aktuellen Zustandsparametern des Objekts erfolgt durch Anpassung der Zustandsparameter an die zu dem Objekt assoziierten Ortungsmessungen. Das Schätzen von aktuellen Zustandsparametern unter Berücksichtigung der Gewichtungen kann auch als gewichtete Schätzung, gewichtete Anpassung oder gewichtetes Fitten (engl.: weighted fitting) bezeichnet werden.

Der Lösungsgedanke besteht im Kern darin, dass für neue Messungen, die zu einem bereits angelegten Objekt assoziiert werden, eine jeweilige Assoziationswahrscheinlichkeit bestimmt wird, und die Assoziationswahrscheinlichkeiten in Gewichtungen für einen gewichteten Fit von Modellparametern (Zustandsparametern) des Objekts eingehen. Der Fit kann beispielsweise für ein Geradenstück, welches eine Kante eines Objekts beschreibt, für die Zustandsparameter Ort, Orientierung, und Minimum und Maximum eines Gültigkeitsbereichs (Endpunkte des Geradenstücks) erfolgen, und es wird somit das Geradenstück neu geschätzt.

Indem mehrere Messungen in eine Parameterschätzung von Zustandsparametern des Objekts eingehen, kann der Datenumfang eines Objekts verringert werden, und es kann eine robustere Beschreibung einer Vielzahl von Objekten ermöglicht werden. Dabei kann zugleich eine iterative Fortschreibung von Objektzuständen von Objekten durch den Zustandsschätzer erfolgen. Gegenüber einer herkömmlichen Zuordnung einzelner Messungen zu definierten Punkten eines Modells wird somit eine größere Robustheit erreicht. Insbesondere kann durch die Gewichtung der Parameteranpassung der Zustandsparameter die Robustheit des Verfahrens gegenüber nicht im Modell enthaltenen systematischen Abweichungen zwischen Ortungsmessungen und dem Modell erhöht werden. Beispiele für derartige systematische Abweichungen sind z.B. systematische Abweichungen in der Radialgeschwindigkeit von Reflexionen an drehenden Rädern, oder z.B. Abweichungen realer Objektkantenverläufen von einer Modellierung in Form einer geraden Strecke.

Eine Ortungsmessung umfasst Messungen des Abstands r, der Radialgeschwindigkeit vr, und/oder eines Objektwinkels phi, beispielsweise eines Azimutwinkels. Beim Radarsensor entsprechen die Ortungsmessungen Radarreflexionen an einem Objekt.

Ein Objektzustand kann beispielsweise Zustandsparameter eines Rechteckkastens (Box) oder einer Kante in einer Umgebung des Umfeldsensors umfassen, und wird durch eine kartesische Position, Ausdehnung, und/oder Geschwindigkeit in kartesischen Koordinaten beschrieben.

Dass eine Bestimmung oder Berechnung von einer Größe abhängt, bedeutet hier, dass die Größe eine Eingangsgröße der Bestimmung oder Berechnung ist, und dass das Ergebnis der Bestimmung oder Berechnung von ihr abhängt. Insbesondere umfasst eine Eingangsgröße der Berechnung unterschiedliche Werte, für die unterschiedliche Ergebnisse erhalten werden.

Die Assoziationswahrscheinlichkeit ist die Wahrscheinlichkeit dafür, dass die Ortungsmessung eine genaue Ortung eines realen Objektes darstellt, auf welches sich der geschätzte Objektzustand bezieht. Die Assoziationswahrscheinlichkeit gibt also die Wahrscheinlichkeit dafür an, dass die betreffende Ortungsmessung zu dem durch den geschätzten Objektzustand beschriebenen Objekt gehört. Mit anderen Worten gibt die Assoziationswahrscheinlichkeit eine Wahrscheinlichkeit dafür an, dass die Ortungsmessung von dem realen Objekt erhalten wurde, welches durch den geschätzten Objektzustand beschrieben wird.

Bei der Bestimmung der Assoziationswahrscheinlichkeit wird der geschätzte Objektzustand berücksichtigt, wobei für zunehmende räumliche Übereinstimmungen eines gemessenen Ortes einer Ortungsmessung mit dem geschätzten Objektzustand zunehmende Assoziationswahrscheinlichkeiten bestimmt werden, und/oder wobei für zunehmende Übereinstimmungen einer gemessenen Geschwindigkeit einer Ortungsmessung mit dem geschätzten Objektzustand zunehmende Assoziationswahrscheinlichkeiten bestimmt werden.

Unterschiedliche Assoziationswahrscheinlichkeiten werden durch unterschiedliche Gewichtungen (Gewichte) berücksichtigt. Die Assoziationswahrscheinlichkeit wird als einer von mehreren Werten bestimmt, die mehrere Zwischenwerte zwischen einer unteren Grenze (z.B. Null) und einer oberen Grenze (z.B. Eins) umfassen. Beispielsweise kann die Assoziationswahrscheinlichkeit aus einer Menge von diskreten Werten oder aus einem Wertebereich bestimmt werden.

Bei der Anpassung der Zustandsparameter an die zu dem Objekt assoziierten Ortungsmessungen ist für die Ortungsmessungen jeweils die Gewichtung abhängig von der bestimmten Assoziationswahrscheinlichkeit für die Assoziierung der betreffenden Ortungsmessung zu dem Objekt. Es werden für zunehmende Assoziationswahrscheinlichkeiten zunehmende Gewichtungen verwendet. Und es werden die Assoziationswahrscheinlichkeiten als Gewichtungen der Ortungsmessungen bei der Anpassung der Zustandsparameter an die zum dem Objekt assoziierten Ortungsmessungen verwendet.

In einem oder mehreren Ausführungsformen wird bei dem Bestimmen der Assoziationswahrscheinlichkeit für die Assoziierung einer Ortungsmessung zu dem Objekt die Assoziationswahrscheinlichkeit unter Berücksichtigung der Messunsicherheit der Ortungsmessung bestimmt. Beispielsweise kann die Messunsicherheit der Ortungsmessung durch eine Verringerung der betreffenden Assoziationswahrscheinlichkeit berücksichtigt werden, wobei für zunehmende Messunsicherheiten größere Verringerungen erfolgen können.

In einem oder mehreren Ausführungsformen wird bei dem Bestimmen der Assoziationswahrscheinlichkeit für die Assoziierung einer Ortungsmessung zu dem Objekt die Assoziationswahrscheinlichkeit unter Berücksichtigung einer Unsicherheit des geschätzten Objektzustands des Objekts bestimmt. Beispielsweise kann die Unsicherheit des geschätzten Objektzustands des Objekts durch eine Verringerung der betreffenden Assoziationswahrscheinlichkeit berücksichtigt werden, wobei für zunehmende Unsicherheiten des geschätzten Objektzustands des Objekts größere Verringerungen erfolgen können.

In einem oder mehreren Ausführungsformen wird bei dem Bestimmen der Assoziationswahrscheinlichkeit für die Assoziierung einer Ortungsmessung zu dem Objekt die Assoziationswahrscheinlichkeit unter Berücksichtigung einer Modell-Unsicherheit des geschätzten Objektzustands des Objekts bestimmt. Beispielsweise kann die Modell-Unsicherheit einer erwarteten Abweichung realer Objekte von einem dem Objekt zugrundeliegenden Modell entsprechen. Die Modell-Unsicherheit kann insbesondere beispielsweise eine Form-Unsicherheit umfassen. Beispielsweise kann die Modell-Unsicherheit bei einem Objekt, dem ein geometrisches Modell zugrundeliegt, die Abweichungen vom Modell beschreiben, welche durch die von dem geometrischen Modell abweichenden realen Formen von PKW und LKW erwartet werden. Beispielsweise kann die Modell-Unsicherheit bei einem Objekt, dem ein Modell eines rechteckigen Kastens (oder einer geraden Kante) zugrundeliegt, die Abweichungen vom Modell beschreiben, welche durch die von der Kastenform (oder der Form einer geraden Kante) abweichenden realen Formen von PKW und LKW erwartet werden.

Vorzugsweise wird in dem Schritt des Assoziierens von erhaltenen Ortungsmessungen zu dem durch einen geschätzten Objektzustand beschriebenen Objekt eine Ortungsmessung nur dann zu dem durch den geschätzten Objektzustand beschriebenen Objekt assoziiert, wenn die Assoziationswahrscheinlichkeit für die Assoziierung einen Mindestwert erreicht. Dies wird auch als Gating bezeichnet. Somit gehen die Ortungsmessungen, auf deren Basis das Schätzen von aktuellen Zustandsparametern des Objekts durchgeführt wird, mit jeweiligen Gewichtungen in die Schätzung ein, wobei die jeweilige Gewichtung abhängig ist von der bestimmten Assoziationswahrscheinlichkeit. Dabei werden oberhalb des Mindestwerts unterschiedliche Assoziationswahrscheinlichkeiten durch unterschiedliche Gewichtungen berücksichtigt. Es erfolgt also nicht lediglich eine Aussortierung von Ortungsmessungen und eine gleichwertige Berücksichtigung der übrigen Ortungsmessungen.

Das Assoziieren von erhaltenen Ortungsmessungen zu einem durch einen geschätzten Objektzustand beschriebenen Objekt kann ein Assoziieren von erhaltenen Ortungsmessungen zu einem oder mehreren durch einen geschätzten Objektzustand beschriebenen Teilobjekten eines Objekts umfassen. Eine Assoziierung zu einem Teilobjekt eines Objekts stellt auch eine Assoziierung zu dem Objekt dar.

Die aktuellen Zustandsparameter, die im Schritt des Schätzens von aktuellen Zustandsparametern des Objekts geschätzt werden, können beispielsweise Zustandsparameter von einem oder mehreren Teilobjekten des Objekts sein. So können beispielsweise Zustandsparameter einer Seitenkante eines Rechteckkastens auf der Basis von zu der Seitenkante assoziierten Ortungsmessungen geschätzt werden.

Das Verfahren umfasst vorzugsweise: Aktualisieren des geschätzten Objektzustands des Objekts durch den Zustandssschätzer, basierend auf dem vorherigen geschätzten Objektzustand des Objekts und auf den geschätzten aktuellen Zustandsparametern des Objekts. Das Aktualisieren kann somit ein iteratives Aktualisieren sein. Besonders bevorzugt umfasst das Verfahren: Erzeugen einer Vorhersage (Prädiktion) eines neuen Objektzustands durch den Zustandsschätzer anhand des vorherigen geschätzten Objektzustands des Objekts; und Korrigieren der Vorhersage des neuen Objektzustands durch den Zustandsschätzer anhand der geschätzten aktuellen Zustandsparameter des Objekts.

Für die iterative Aktualisierung des geschätzten Objektzustands des Objekts können außerdem Unsicherheiten der geschätzten aktuellen Zustandsparameter des Objekts berücksichtigt werden, die anhand der Messunsicherheiten der Messungen geschätzt werden.

Der Zustandssschätzer ist vorzugsweise dazu eingerichtet, den geschätzten Objektzustand des Objekts zu aktualisieren, basierend auf den geschätzten aktuellen Zustandsparametern des Objekts. Mit anderen Worten ist der Zustandsschätzer dazu eingerichtet, einen neuen Objektzustands des Objekts basierend auf dem vorherigen geschätzten Objektzustand und auf den geschätzten aktuellen Zustandsparametern des Objekts zu bestimmen. Der Zustandsschätzer ist besonders bevorzugt dazu eingerichtet, anhand eines vorherigen geschätzten Objektzustands des Objekts eine Vorhersage (Prädiktion) eines neuen Objektzustands zu erzeugen und anhand der geschätzten aktuellen Zustandsparameter des Objekts die Prädiktion zu korrigieren, um den Objektzustand zu aktualisieren. Es kann sich beispielsweise um ein Kalman Filter, Extended Kalman Filter, Unscented Kalman Filter oder andere bekannte Zustandsschätzer handeln.

Das Verfahren weist vorzugsweise die Schritte auf:

Erhalten von Messunsicherheiten der Ortungsmessungen von dem Umfeldsensor; und

Schätzen von Unsicherheiten der geschätzten aktuellen Zustandsparameter des Objekts basierend auf den erhaltenen Messunsicherheiten der zu dem Objekt assoziierten Ortungsmessungen, wobei die geschätzten aktuellen Zustandsparameter des Objekts und die geschätzten Unsicherheiten an den Zustandsschätzer zum Aktualisieren des geschätzten Objektzustands des Objekts übergeben werden.

Das Verfahren kann beispielsweise weiter umfassen: Aktualisieren einer geschätzten Unsicherheit des geschätzten Objektzustands des Objekts durch den Zustandsschätzer.

Gemäß einer Weiterbildung der Erfindung werden die Unsicherheiten der gefitteten Modellparameter mit Hilfe einer Unscented-Transformation (engl.: unscented transform, UT) bestimmt.

Beispielsweise kann das Schätzen von Unsicherheiten der geschätzten aktuellen Zustandsparameter des Objekts mittels einer Unscented-Transformation erfolgen, umfassend die Schritte:

Berechnen von Sigma-Punkten der Unscented-Transformation, wobei ein Vektor, der die zu dem Objekt assoziierten Ortungsmessungen umfasst, als Mittelwertschätzung für eine Verteilung der zu berechnenden Sigma-Punkte verwendet wird, und wobei eine Matrix, welche die Messunsicherheiten der zu dem Objekt assoziierten Ortungsmessungen umfasst, als Kovarianzmatrix für die Verteilung der zu berechnenden Sigma-Punkte verwendet wird; für jeden Sigma-Punkt der Unscented-Transformation, Schätzen von aktuellen Zustandsparametern des Objekts, umfassend eine Anpassung der Zustandsparameter an den jeweiligen Sigma-Punkt; Bestimmen einer Varianz einer Verteilung der für die Sigma-Punkte geschätzten aktuellen Zustandsparameter des Objekts als Schätzung der Unsicherheiten der geschätzten aktuellen Zustandsparameter des Objekts.

Als Eingangsgröße der Unscented-Transformation ist somit gegeben ein Vektor der Ortungsmessungen, die zu dem Objekt assoziiert wurden, und für den die Unsicherheit durch die Messunsicherheiten der Ortungsmessungen, und ggf. auch deren Kovarianzen, angegeben werden kann. Die Sigma-Punkte werden gemäß dem Verfahren der Unscented-Transformation so gewählt, dass die Verteilung der Sigma-Punkte einen Mittelwert und eine Kovarianz aufweisen, welche einem gegebenen Mittelwert in Form des Vektors der zu dem Objekt assoziierten Ortungsmessungen und einer gegebenen Kovarianz in Form der Matrix, welche die Messunsicherheiten der zu dem Objekt assoziierten Ortungsmessungen umfasst, entsprechen. Somit repräsentiert die Verteilung der Sigma-Punkte und ihre Kovarianz die zu dem Objekt assoziierten Ortungsmessungen und deren Messunsicherheiten.

Die Sigma-Punkte werden transformiert, indem zu jedem Sigma-Punkt die Schätzung von aktuellen Zustandsparametern des Objekts durchgeführt wird. Ein jeweiliger Sigma-Punkte wird somit in geschätzte aktuelle Zustandsparameter des Objekts transformiert.

Die (Ko-)varianz der transformierten Sigma-Punkte gibt dann eine geschätzte Unsicherheit der geschätzten aktuellen Zustandsparameter des Objekts an.

Die Unscented-Transformation ermöglicht es somit, durch Transformation der Sigma-Punkte in jeweilige Schätzungen der aktuellen Zustandsparameter des Objekts eine Schätzung der Unsicherheiten der geschätzten aktuellen Zustandsparameter zu erhalten.

Somit kann die Unscented-Transformation es leisten, eine Schätzung der Unsicherheiten der geschätzten aktuellen Zustandsparameter des Objekts zu liefern. Dies ist besonders vorteilhaft, da die Parameteranpassung (auch als Fit bezeichnet) gewöhnlich eine nicht-lineare Abbildung darstellt, und Messunsicherheiten durch eine nicht-lineare Abbildung verzerrt oder mit einem Bias abgebildet würden. Bereits bei einer Transformation von radial-Koordinaten von Ortungsmessungen in kartesische Modellkoordinaten eines Objekts können durch Bestimmung der Unsicherheiten mittels der Unscented-Transformation verbesserte Schätzungen der Unsicherheiten erhalten werden.

Vorzugsweise werden bei der Anpassung der Zustandsparameter an den jeweiligen Sigma-Punkt Gewichtungen für den Sigma-Punkt berücksichtigt, welche Gewichtungen von der Kovarianzmatrix abhängig sind.

Beispielsweise können bei der Anpassung der Zustandsparameter an den jeweiligen Sigma-Punkt die gleichen Gewichtungen verwendet werden wie bei der Anpassung der Zustandsparameter an die zu dem Objekt assoziierten Ortungsmessungen (in dem Schritt des Schätzen von aktuellen Zustandsparametern des Objekts).

Gegenstand der Erfindung ist außerdem ein Sensorsystem mit einem Umfeldsensor für Kraftfahrzeuge, in dem eines der oben beschriebenen Verfahren implementiert ist.

Im Folgenden wird ein Ausführungsbeispiel anhand der Zeichnung näher erläutert.

Es zeigen:

Fig. 1 eine schematische Darstellung einer Umgebung eines Kraftfahrzeugs;

Fig. 2 eine Prinzipskizze eines Sensorsystems für ein Kraftfahrzeug mit einem Umfeldsensor; und

Fig. 3 einen schematischen Ablaufplan einer Unscented- Transformation zur Bestimmung von Unsicherheiten geschätzter aktueller Zustandsparameter eines Objekts.

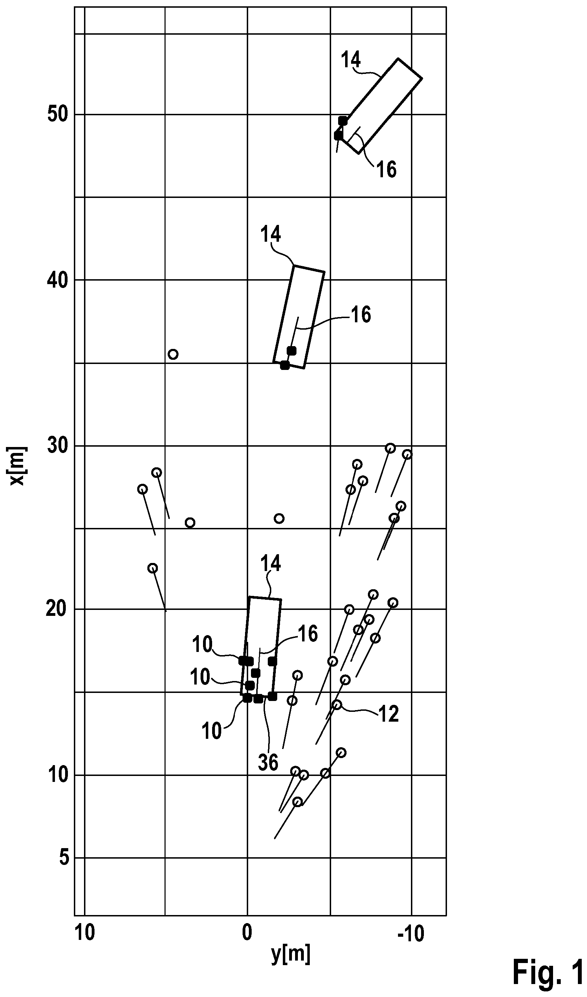

Fig. 1 zeigt schematisch eine Umgebung eines Umfeldsensors eines Kraftfahrzeugs mit mehreren, in einem Erfassungsbereich des Umfeldsensors detektierten Ortungen, die nachfolgend als Ortungsmessungen 10 bzw. 12 bezeichnet werden. Weiter dargestellt sind Objekt 14, die reale Objekte in Form von Kraftfahrzeugen repräsentieren und in Form von rechteckigen Kästen modelliert sind. Jedem Objekt ist im Modell eine Position in kartesischen Koordinaten X, Y, eine Ausdehnung, eine Orientierung und eine Geschwindigkeit in Form eines Geschwindigkeitsvektors 16 zugeordnet. Eine einzelne Ortungsmessung 10, 12 umfasst beispielsweise einen radialen Abstand r, eine radiale Relativgeschwindigkeit vr sowie eine Richtungswinkel in Form eines Azimutwinkels phi, jeweils bezogen auf die Eigenposition des Umfeldsensors oder des eigenen Fahrzeugs bei x = 0, y = 0.

In Fig. 1 sind Ortungsmessungen 10, die zu einem Objekt 14 assoziiert wurden, mit ausgefüllten Symbolen darstellt. Ortungsmessungen 12, die zu keinem der Objekte 14 assoziiert wurden, sind durch ein offenes Symbol dargestellt.

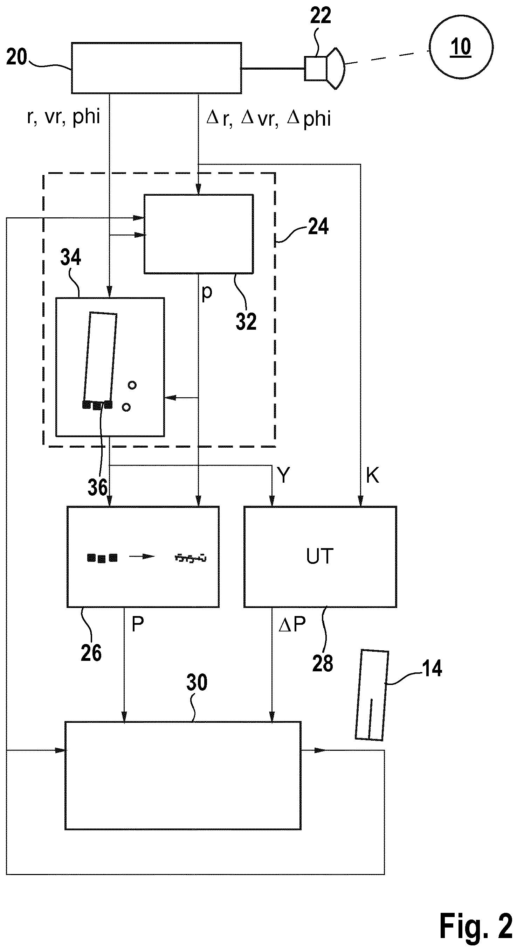

Fig. 2 zeigt schematisch ein Sensorsystem mit einem Umfeldsensor 20 in Form eines Radarsensors mit einem Antennensystem 22. Weiter ist schematisch eine Ortungsmessung 10 entsprechend einer georteten Radarreflexion dargestellt.

Eine Auswerteeinheit des Sensorsystems umfasst eine Assoziationseinheit 24 zum Assoziieren von Ortungsmessungen 10 zu einem Objekt 14, eine Anpassungseinheit 26 zum Durchführen eines Fits zur Anpassung von Zustandsparametern an zu einem Objekt 14 assoziierte Ortungsmessungen 10, eine Unscented-Transformations-Einheit 28 zum Schätzen von Unsicherheiten der angepassten aktuellen Zustandsparameter, sowie einen Zustandsschätzer 30 zur iterativen Aktualisierung eines geschätzten Objektzustandes des Objekts 14.

Die Assoziations-Einheit 24 umfasst eine erste Einheit 32 zum Berechnen von Assoziationswahrscheinlichkeiten sowie eine zweite Einheit 34 zum Auswählen und Assoziieren von Ortungsmessungen 10 zu einem Objekt 14.

Von dem Umfeldsensor 20 werden Ortungsmessungen 10, 12 mit beispielsweise den Parametern r, vr, phi sowie dazugehörige Messunsicherheiten Δr, Δvr, Δphi erhalten.

Anfänglich werden Objekte 14 in an sich bekannter Weise über einen unabhängigen Mechanismus initialisiert, wie beispielsweise ein Clustern von bislang nicht zu Objekten 14 assoziierten Ortungsmessungen 10, 12 und ein entsprechendes Initialisieren von Objektzuständen der neu erzeugten Objekte 14.

Die erste Einheit 32 berechnet zu den jeweiligen Objekten 14 Assoziationswahrscheinlichkeiten p für die Assoziierung jeweiliger Ortungsmessungen 10, 12 zu dem betreffenden Objekt 14. Die zweite Einheit 34 wählt zu jedem Objekt 14 die aufgrund ihrer Assoziationswahrscheinlichkeit p zu dem Objekt 14 zu assoziierenden Ortungsmessungen 10 aus und assoziiert diese zu dem betreffenden Objekt 14. Ortungsmessungen 12, die nur mit einer geringen Assoziationswahrscheinlichkeit unterhalb eines Mindestwertes pmin zu einem Objekt 14 zu assoziieren sind, werden aussortiert, d. h., sie werden nicht assoziiert. Dies wird auch als Gating bezeichnet. In der in Fig. 1 gezeigten Darstellung sind die zu jeweiligen Objekten 14 assoziierten Ortungsmessungen 10 mit ausgefüllten Symbolen dargestellt.

Im gezeigten Beispiel der Fig. 2 ist die Assoziation für ein Teilobjekt 36 des Objekts 14 in Form einer vorderen Kante des Objekts 14 beispielhaft dargestellt.

Das Bestimmen der Assoziationswahrscheinlichkeit p für die Assoziierung einer Ortungsmessung 10 zu einem Objekt 14 (bzw. dem Teilobjekt 36) kann beispielsweise erfolgen unter Berücksichtigung:
der Messunsicherheit $\Delta r$, $\Delta vr$, $\Delta phi$, etwa in Form einer Kovarianz im Messparameterraum;

einer Vorhersageunsicherheit des Objektes 14 bezüglich der Parameter des vorhergesagten Objektzustandes des Objekts 14 wie Position, Geschwindigkeit, Ausdehnung, Orientierung; und/oder
einer Modell-Unsicherheit, beispielsweise in Form einer Form-Unsicherheit des Objektes 14.

Beispielsweise kann als Form-Unsicherheit eines Teilobjektes 36 in Form einer Kante oder Seitenkante eines Objektes 14 eine Abweichung im Bereich von +/-30 cm einzelner Ortungsmessungen 10 von einem exakt geradlinigen Verlauf der Kante des Modells des Teilobjekts 36 berücksichtigt werden.

Basierend auf den bestimmten Assoziationswahrscheinlichkeiten p wird dann eine Parameterschätzung in Form eines gewichteter Modellfit für das Teilobjekt 36 bzw. das Objekt 14 durchgeführt. Die Anpassungseinheit 26 führt beispielsweise einen gewichteten Geradenfit in Form eines gewichteten in Kleinste-Quadrate-Geradenfits bzw. in Form einer gewichteten Hauptkomponentenanalyse durch. Eingangsgrößen des Fits sind in diesem Falle die Positionen der Ortungsmessungen 10. Es kann auch ein Gültigkeitsbereich der angepassten Gerade, entsprechend der Ausdehnung des Teilobjekts 36, geschätzt werden. Für eine Schätzung eines aktuellen Zustandsparameters in Form einer Geschwindigkeit vx, vy eines Objektes 14 kann ebenfalls ein gewichteter Kleinste-Quadrate-Modellfit durchgeführt werden. Beispielswiese kann die Anpassungseinheit 26 bei einer angenommenen Gierrate des Objektes 14 von Null die aktuellen Zustandsparameter vx und vy im Modell

$$vr = vx * cos(phi) + vy * sin(phi)$$

schätzen.

Die von der Anpassungseinheit 26 geschätzten aktuellen Zustandsparameter eines Objekts 14 (oder seiner Teilobjekte 36) werden an den Zustandsschätzer 30 übergeben.

Um dem Zustandsschätzer 30 zugehörige Unsicherheiten zu den geschätzten aktuellen Zustandsparametern eines Objekts 14 zu liefern, werden die Unsicherheiten wie folgt geschätzt, indem eine Unscented-Transformation durchgeführt wird. Da es sich sowohl beim Geradenfit als auch bei einem Fit mit der Geschwindigkeitsgleichung vr = vx * cos(phi) + vy * sin(phi) um einen nichtlinearen Zusammenhang handelt, wird eine Unscented Transformation verwendet.

Alle zu einem Objekt 14 assoziierten Ortungsmessungen 10 werden in einem gemeinsamen Vektor Y zusammengefasst. Dazu werden die einzelnen Ortungsmessungen 10, die jeweils eine Messvektordimension n haben, und von denen I Ortungsmessungen 10 vorliegen, zu einem Vektor der Länge N = n * I zusammengefasst. Eine Kovarianzmatrix K des zusammengefassten Messvektors Y wird erzeugt, indem beispielsweise die Kovarianzen der einzelnen Ortungsmessungen 10 in einer Block-Diagonalmatrix kombiniert werden. Die Kovarianzmatrix hat eine Größe N x N. Sind Kovarianzen zwischen den Ortungsmessungen bekannt, können diese in Neben-Block-Diagonalen verzeichnet werden.

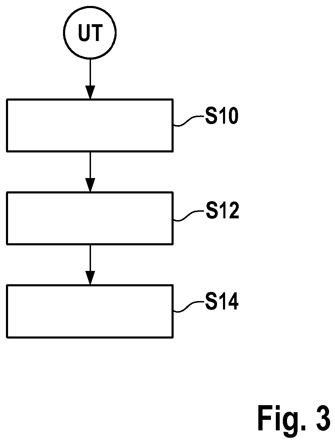

Die Durchführung der Unscented-Transformation (UT) ist in Fig. 3 in Form eines schematischen Ablaufplans dargestellt. In einem Schritt S10 werden Sigma-Punkte basierend auf dem zusammengefassten Messvektor Y und dessen zusammengefasster Kovarianz K berechnet, wie an sich für die Unscented Transformation bekannt. Bei einem Gesamt-Messvektor Y der Dimension N werden dabei 2N + 1 Sigma-Punkte berechnet. Für jeden der Sigma-Punkte wird der gewichtete Modellfit (Schritt S12) durchgeführt. Dies entspricht jeweils der von der Anpassungseinheit 26 vorgenommenen Anpassung. Die resultierenden 2N + 1 Ergebnisse der Anpassung stellen eine Verteilung dar, deren Varianz (Kovarianzmatrix) eine Schätzung der Unsicherheiten der von der Anpassungseinheit 26 geschätzten aktuellen Zustandsparameter des Objektes 14 darstellt. Die Varianz (Kovarianzmatrix) wird dementsprechend aus der Verteilung der 2N + 1 Ergebnisse errechnet (Schritt S14). Sie wird zusammen mit den geschätzten aktuellen Zustandsparametern an den Zustandsschätzer 30 übergeben.

Der Zustandsschätzer 30 aktualisiert iterativ den geschätzten Objektzustand des Objekts 14 anhand der von der Anpassungseinheit 26 übergebenen geschätzten aktuellen Zustandsparameter und der von der Unscented-Transformationseinheit 28 übergebenen, zugehörigen Schätzung der Unsicherheiten der geschätzten aktuellen Zustandsparameter des Objekts 14.

Die geschätzten aktuellen Zustandsparameter des Objekts stellen eine Pseudo-Messung P dar. Dem Zustandsschätzer 30 wird in Form der Varianz ΔP die Schätzung der Unsicherheiten der geschätzten aktuellen Zustandsparameter des Objekts, also der Pseudo-Messung P übergeben. Eine Berücksichtigung der Messunsicherheiten ΔP der Pseudo-Messung P ermöglicht es somit, die Zuverlässigkeit der Aktualisierung des geschätzten Objektzustands durch den Zustandsschätzer 30 zu erhöhen.

Der Zustandsschätzer 30 kann zudem die Ausdehnungen des Objektes 14 mit Hilfe der geschätzten aktuellen Zustandsparameter des Objekts 14 (bzw. seiner Teilobjekte 36) schätzen und aktualisieren. Dadurch können beispielsweise schrittweise auch sehr große Objekte, wie z.B. Lastkraftwagen, gänzlich in ihrer Ausdehnung erfasst werden. Eine genauere Schätzung der Ausdehnung eines Objekts 14 kann dann wiederum in einer nächsten Iteration (entsprechend einem nächsten Messzyklus) zu einer besseren Assoziation neuer Ortungsmessungen 10 durch die Assoziationseinheit 24 führen. Entsprechend kann auch die Orientierung des Objekts 14 aktualisiert werden.

Die beschriebenen Schritte können jeweils für alle Objekte 14 und dazu assoziierten Ortungsmessungen 10 entsprechend ausgeführt werden.

## Patentansprüche

1. Verfahren zum Auswerten von Ortungsmessungen eines Umfeldsensors in Form eines Radarsensors für ein Kraftfahrzeug, mit den Schritten:

   Erhalten von Ortungsmessungen (10) in radialen Koordinaten von Radarreflexionen an einem Objekt von dem Umfeldsensor (20);
   Assoziieren von erhaltenen Ortungsmessungen (10) zu einem durch einen geschätzten Objektzustand beschriebenen, bereits angelegten Objekt (14), wobei der geschätzte Objektzustand durch Zustandsparameter in Form einer kartesischen Position, Ausdehnung, und/oder Geschwindigkeit in kartesischen Koordinaten beschrieben wird, und
   wobei für die Ortungsmessungen (10) jeweils eine Assoziationswahrscheinlichkeit (p) für die Assoziierung der Ortungsmessung (10) zu dem bereits angelegten Objekt (14) unter Berücksichtigung des geschätzten Objektzustands des Objekts (14) bestimmt wird;
   Schätzen von aktuellen Zustandsparametern (P) des Objekts (14), umfassend eine Anpassung der Zustandsparameter an die zu dem Objekt (14) assoziierten Ortungsmessungen (10), wobei bei der Anpassung Gewichtungen der zu dem Objekt (14) assoziierten Ortungsmessungen (10) berücksichtigt werden, wobei für die Ortungsmessungen (10) jeweils die Gewichtung abhängig ist von der bestimmten Assoziationswahrscheinlichkeit (p) für die Assoziierung der betreffenden Ortungsmessung (10) zu dem Objekt (14);
   Übergeben der geschätzten aktuellen Zustandsparameter (P) des Objekts (14) an einen Zustandsschätzer (30) zum Aktualisieren des geschätzten Objektzustands des Objekts (14).

2. Verfahren nach Anspruch 1, bei dem bei dem Bestimmen der Assoziationswahrscheinlichkeit (p) für die Assoziierung einer Ortungsmessung (10) zu dem Objekt (14) die Assoziationswahrscheinlichkeit (p) eine Wahrscheinlichkeit repräsentiert dafür, dass die Ortungsmessung (10) eine genau Ortung eines realen Objektes darstellt, auf welches sich der geschätzte Objektzustand bezieht.

3. Verfahren nach Anspruch 1 oder 2, bei dem bei dem Bestimmen der Assoziationswahrscheinlichkeit (p) für die Assoziierung einer Ortungsmessung zu dem Objekt (14) die Assoziationswahrscheinlichkeit (p) unter Berücksichtigung der Messunsicherheit der Ortungsmessung (10) bestimmt wird.

4. Verfahren nach einem der vorstehenden Ansprüche, bei dem bei dem Bestimmen der Assoziationswahrscheinlichkeit (p) für die Assoziierung einer Ortungsmessung (10) zu dem Objekt (14) die Assoziationswahrscheinlichkeit (p) unter Berücksichtigung einer Unsicherheit des geschätzten Objektzustands des Objekts (14) bestimmt wird.

5. Verfahren nach einem der vorstehenden Ansprüche, bei dem bei dem Bestimmen der Assoziationswahrscheinlichkeit (p) für die Assoziierung einer Ortungsmessung (10) zu dem Objekt (14) die Assoziationswahrscheinlichkeit (p) unter Berücksichtigung einer Modell-Unsicherheit des geschätzten Objektzustands des Objekts (14) bestimmt wird.

6. Verfahren nach einem der vorstehenden Ansprüche, wobei das Verfahren die Schritte aufweist:

   Erhalten von Messunsicherheiten der Ortungsmessungen (10) von dem Umfeldsensor (20); und
   Schätzen von Unsicherheiten (ΔP) der geschätzten aktuellen Zustandsparameter (P) des Objekts (14) basierend auf den erhaltenen Messunsicherheiten der zu dem Objekt (14) assoziierten Ortungsmessungen (10), wobei die geschätzten aktuellen Zustandsparameter (P) des Objekts (14) und die geschätzten Unsicherheiten (ΔP) an den Zustandsschätzer (30) zum Aktualisieren des geschätzten Objektzustands des Objekts (14) übergeben werden.

**7.** Verfahren nach Anspruch 6, wobei das Schätzen von Unsicherheiten (ΔP) der geschätzten aktuellen Zustandsparameter des Objekts (14) mittels einer Unscented-Transformation erfolgt, wobei die zu dem Objekt (14) assoziierten Ortungsmessungen (10) und die erhaltenen Messunsicherheiten der zu dem Objekt (14) assoziierten Ortungsmessungen (10) als Eingangsgrößen der Unscented-Transformation verwendet werden.

**8.** Verfahren nach Anspruch 6 oder 7, bei dem das Schätzen von Unsicherheiten (ΔP) der geschätzten aktuellen Zustandsparameter (P) des Objekts (14) mittels einer Unscented-Transformation erfolgt, umfassend die Schritte:

Berechnen (S10) von Sigma-Punkten der Unscented-Transformation, wobei ein Vektor (Y), der die zu dem Objekt (14) assoziierten Or- tungsmessungen (10) umfasst, als Mittelwert- schätzung für eine Verteilung der zu berechnenden Sigma-Punkte verwendet wird, und wobei eine Matrix, welche die Messunsicherheiten der zu dem Objekt (14) assoziierten Ortungsmessungen (10) umfasst, als Kovarianzmatrix (K) für die Verteilung der zu berechnenden Sigma-Punkte verwendet wird; für jeden Sigma-Punkt der Unscented-Transformation, Schätzen (S12) von aktuellen Zustandsparametern des Objekts (14), umfassend eine Anpassung der Zustandsparameter an den jeweiligen Sigma-Punkt; Bestimmen (S14) einer Varianz einer Verteilung der für die Sigma-Punkte geschätzten aktuellen Zustandsparameter des Objekts (14) als Schätzung der Unsicherheiten (ΔP) der geschätzten aktuellen Zustandsparameter (P) des Objekts (14).

**9.** Sensorsystem für ein Kraftfahrzeug, mit einem Radar-Umfeldsensor (20) und einer Auswerteeinheit (24, 26, 28, 30) zum Auswerten von Ortungsmessungen des Umfeldsensors (20), wobei die Auswerteeinheit (24, 26, 28, 30) einen Zustandsschätzer (30) zum iterativen Aktualisieren geschätzter Objektzustände jeweiliger Objekte (14) umfasst, wobei die Auswerteeinheit (24, 26, 28, 30) dazu eingerichtet ist, das Verfahren nach einem der vorstehenden Ansprüche auszuführen.

**Claims**

**1.** Method for evaluating location measurements of an environment sensor in the form of a radar sensor for a motor vehicle, comprising the steps of:

obtaining location measurements (10) in radial coordinates for radar reflections from an object from the environment sensor (20); associating obtained location measurements (10) with an already created object (14) described by an estimated object state, wherein the estimated object state is described by state parameters in the form of a Cartesian position, extent and/or velocity in Cartesian coordinates, and wherein an association probability (p) for the association of the location measurement (10) with the already created object (14) is determined for each of the location measurements (10) in consideration of the estimated object state of the object (14); estimating current state parameters (P) of the object (14), comprising customizing the state parameters to the location measurements (10) associated with the object (14), the customization giving consideration to weightings of the location measurements (10) associated with the object (14), the weighting for each of the location measurements (10) depending on the determined association probability (p) for the association of the relevant location measurement (10) with the object (14); transferring the estimated current state parameters (P) of the object (14) to a state estimator (30) to update the estimated object state of the object (14).

**2.** Method according to Claim 1, in which the determination of the association probability (p) for the association of a location measurement (10) with the object (14) involves the association probability (p) representing a probability of the location measurement (10) being an exact location of a real object to which the estimated object state relates.

**3.** Method according to Claim 1 or 2, in which the determination of the association probability (p) for the association of a location measurement with the object (14) involves the association probability (p) being determined in consideration of the measurement uncertainty of the location measurement (10).

**4.** Method according to one of the preceding claims, in which the determination of the association probability (p) for the association of a location measurement (10) with the object (14) involves the association probability (p) being determined in consideration of an uncertainty of the estimated object state of the object (14).

**5.** Method according to one of the preceding claims, in which the determination of the association probability (p) for the association of a location measurement (10) with the object (14) involves the association probability (p) being determined in consideration of a model uncertainty of the estimated object state of the object (14).

6. Method according to one of the preceding claims, the method comprising the steps of:

obtaining measurement uncertainties of the location measurements (10) from the environment sensor (20); and
estimating uncertainties ($\Delta$P) of the estimated current state parameters (P) of the object (14) on the basis of the obtained measurement uncertainties of the location measurements (10) associated with the object (14),
wherein the estimated current state parameters (P) of the object (14) and the estimated uncertainties ($\Delta$P) are transferred to the state estimator (30) to update the estimated object state of the object (14).

7. Method according to Claim 6, wherein the estimation of uncertainties ($\Delta$P) of the estimated current state parameters of the object (14) is carried out by means of an unscented transformation,
wherein the location measurements (10) associated with the object (14) and the obtained measurement uncertainties of the location measurements (10) associated with the object (14) are used as input variables for the unscented transformation.

8. Method according to Claim 6 or 7, in which the estimation of uncertainties ($\Delta$P) of the estimated current state parameters (P) of the object (14) is carried out by means of an unscented transformation, comprising the steps of:

computing (S10) sigma points of the unscented transformation, wherein a vector (Y) comprising the location measurements (10) associated with the object (14) is used as a mean estimate for a distribution of the sigma points to be computed, and wherein a matrix comprising the measurement uncertainties of the location measurements (10) associated with the object (14) is used as a covariance matrix (K) for the distribution of the sigma points to be computed;
estimating (S12) current state parameters of the object (14) for each sigma point of the unscented transformation, comprising customizing the state parameters to the respective sigma point;
determining (S14) a variance of a distribution of the current state parameters of the object (14) that are estimated for the sigma points as an estimate of the uncertainties ($\Delta$P) of the estimated current state parameters (P) of the object (14).

9. Sensor system for a motor vehicle, comprising a radar environment sensor (20) and an evaluation unit (24, 26, 28, 30) for evaluating location measurements of the environment sensor (20), the evaluation unit (24, 26, 28, 30) comprising a state estimator (30) for iteratively updating estimated object states of respective objects (14), the evaluation unit (24, 26, 28, 30) being configured to carry out the method according to one of the preceding claims.

**Revendications**

1. Procédé pour l'évaluation de mesures de localisation d'un capteur d'environnement sous la forme d'un capteur radar pour un véhicule automobile, comprenant les étapes suivantes :

obtention de mesures de localisation (10) en coordonnées radiales de réflexions radar sur un objet par le capteur d'environnement (20) ;
association de mesures de localisation obtenues (10) à un objet (14) déjà créé décrit par un état d'objet estimé, l'état d'objet estimé étant décrit par des paramètres d'état sous la forme d'une position cartésienne, d'une extension et/ou d'une vitesse en coordonnées cartésiennes, et
dans lequel
pour chacune des mesures de localisation (10), une probabilité d'association (p) pour l'association de la mesure de localisation (10) à l'objet déjà créé (14) étant déterminée en tenant compte de l'état d'objet estimé (14) ;
estimation de paramètres d'état (P) actuels de l'objet (14), cela comprenant une adaptation des paramètres d'état aux mesures de localisation (10) associées à l'objet (14), des pondérations des mesures de localisation (10) associées à l'objet (14) étant prises en compte lors de l'adaptation, la pondération pour chacune des mesures de localisation (10) dépendant de la probabilité d'association (p) déterminée pour l'association de la mesure de localisation (10) concernée à l'objet (14) ;
transmission des paramètres d'état (P) actuels estimés de l'objet (14) à un estimateur d'état (30) pour la mise à jour de l'état d'objet estimé de l'objet (14).

2. Procédé selon la revendication 1, dans lequel, lors de la détermination de la probabilité d'association (p) pour l'association d'une mesure de localisation (10) à l'objet (14), la probabilité d'association (p) représente une probabilité que la mesure de localisation (10) représente une localisation précise d'un objet réel auquel se rapporte l'état d'objet estimé.

3. Procédé selon la revendication 1 ou 2, dans lequel, lors de la détermination de la probabilité d'association (p) pour l'association d'une mesure de localisation à l'objet (14), la probabilité d'association (p) est déterminée en tenant compte de l'incertitude de mesure de la mesure de localisation (10).

4. Procédé selon l'une quelconque des revendications précédentes, dans lequel, lors de la détermination de la probabilité d'association (p) pour l'association d'une mesure de localisation (10) à l'objet (14), la probabilité d'association (p) est déterminée en tenant compte d'une incertitude de l'état d'objet estimé (14).

5. Procédé selon l'une quelconque des revendications précédentes, dans lequel, lors de la détermination de la probabilité d'association (p) pour l'association d'une mesure de localisation (10) à l'objet (14), la probabilité d'association (p) est déterminée en tenant compte d'une incertitude de modèle de l'état d'objet estimé (14).

6. Procédé selon l'une quelconque des revendications précédentes, le procédé comprenant les étapes suivantes :

   obtention d'incertitudes de mesure des mesures de localisation (10) par le capteur d'environnement (20) ; et
   estimation d'incertitudes (ΔP) des paramètres d'état actuels estimés (P) de l'objet (14) sur la base des incertitudes de mesure obtenues des mesures de localisation (10) associées à l'objet (14),
   dans lequel les paramètres d'état actuels estimés (P) de l'objet (14) et les incertitudes estimées (ΔP) sont transmis à l'estimateur d'état (30) pour la mise à jour de l'état d'objet estimé de l'objet (14).

7. Procédé selon la revendication 6, dans lequel l'estimation d'incertitudes (ΔP) des paramètres d'état actuels estimés de l'objet (14) est effectuée au moyen d'une transformation sans parfum, les mesures de localisation (10) associées à l'objet (14) et les incertitudes de mesure obtenues des paramètres de localisation (10) associés à l'objet (14) étant utilisées comme valeurs d'entrée de la transformation sans parfum.

8. Procédé selon la revendication 6 ou 7, dans lequel l'estimation d'incertitudes (ΔP) des paramètres d'état actuels estimés (P) de l'objet (14) est effectuée au moyen d'une transformation sans parfum, comprenant les étapes suivantes :

calcul (S10) de points sigma de la transformation sans parfum, un vecteur (Y) qui comprend les mesures de localisation (10) associées à l'objet (14) étant utilisé comme estimation de moyenne pour une distribution des points sigma à calculer, et une matrice, qui comprend les incertitudes de mesure des mesures de localisation (10) associées à l'objet (14), étant utilisée comme matrice de covariance (K) pour la distribution des points sigma à calculer ;
pour chaque point sigma de la transformation sans parfum, estimation (S12) de paramètres d'état actuels de l'objet (14), comprenant une adaptation des paramètres d'état au point sigma respectif ;
détermination (S14) d'une variance d'une distribution des paramètres d'état actuels de l'objet estimés pour les points sigma (14) en tant qu'estimation des incertitudes (ΔP) des paramètres d'état actuels estimés (P) de l'objet (14).

9. Système de capteurs pour véhicule automobile, comprenant un capteur d'environnement radar (20) et une unité d'évaluation (24, 26, 28, 30) pour l'évaluation de mesures de localisation du capteur d'environnement (20), l'unité d'évaluation (24, 26, 28, 30) comprenant un estimateur d'état (30) pour la mise à jour itérative d'états d'objet estimés (14), l'unité d'évaluation (24, 26, 28, 30) étant conçue pour mettre en œuvre le procédé selon l'une quelconque des revendications précédentes.

Fig. 1

**Fig. 2**

UT

S10

S12

S14

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006019474 A1
- DE 102011017323 A1
- US 20140072233 A1
- WO 2018085107 A1

**In der Beschreibung aufgeführte Nicht-Patentliteratur**

- **ROOS et al.** Reliable Orientation Estimation of Vehicles in High-Resolution Radar Images. *IEEE Transactions on Microwave Theory and Techniques*, 2016, vol. 64 (9), 2986-2993